(19)

Europäisches
Patentamt
European
Patent Office
Office européen
des brevets

(11) **EP 3 567 545 A1**

(12) **EUROPEAN PATENT APPLICATION**
published in accordance with Art. 153(4) EPC

(43) Date of publication:
**13.11.2019 Bulletin 2019/46**

(21) Application number: **18865347.1**

(22) Date of filing: **28.03.2018**

(51) Int Cl.:
***G06T 5/00*** (2006.01)

(86) International application number:
**PCT/CN2018/080754**

(87) International publication number:
**WO 2019/174068 (19.09.2019 Gazette 2019/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.03.2018 CN 201810217553**

(71) Applicant: **Huazhong University of Science and
Technology
Wuhan
Hubei 430074 (CN)**

(72) Inventors:
• **SANG, Nong
  Hubei 430074 (CN)**

• **LI, Yacheng
  Hubei 430074 (CN)**
• **LIN, Wei
  Hubei 430074 (CN)**
• **SHAO, Yuanjie
  Hubei 430074 (CN)**
• **GAO, Changxin
  Hubei 430074 (CN)**
• **LI, Lerenhan
  Hubei 430074 (CN)**

(74) Representative: **Becker Kurig Straus
Patentanwälte
Bavariastrasse 7
80336 München (DE)**

(54) **DISTANCE-WEIGHTED SPARSE REPRESENTATION PRIORI-BASED IMAGE RESTORATION
AND MATCHING INTEGRATION METHOD**

(57) The present disclosure discloses a joint image restoration and matching method based on distance weighted sparse representation prior, comprising: estimating a blur kernel by using constraints of the degraded image and the initial clear image on the blur kernel and regularization of a gradient operator to obtain a blur kernel estimation; estimating an initial clear image by using constraints of the blur kernel estimation and the dictionary D on the initial clear image to obtain a clear image estimation; acquiring a sparse representation coefficient vector estimation of the clear image estimation in the dictionary by using the distance-weighted sparse representation algorithm; performing A iterations of the above steps to obtain a target image and an initial location of the target image in the reference image; after reducing the range of the reference image, the restored image and the positioning result of the target image are obtained by the above method. The present disclosure effectively solves the problem that the noise-sensitive and poor restoration effect has a serious influence on the matching task in the existing blur image restoration and matching methods, and is suitable for the visual navigation system.

FIG. 1

**Description**

TECHNICAL FIELD

The disclosure belongs to the technical field of pattern matching, and more particularly relates to a joint image restoration and matching method based on distance weighted sparse representation prior.

BACKGROUND

In a visual navigation system, it is necessary to compare the ground scene image acquired in real time with a reference image stored on an onboard computer to determine the position of the high speed aircraft. Due to the high accuracy of image matching, this precise position information can be utilized to improve the positioning accuracy of the navigation system. However, the acquired images are usually degraded, for example, are low-resolution and blurred. This will pose a big challenge for image matching and positioning. Therefore, the blur image matching and positioning technology has become a key in high-speed aircraft navigation systems.

The existing matching and positioning methods for blur images mainly include two types: (1) for images with low degree of degradation, methods of matching or sparse representation are directly used for positioning; (2) first, image restoration is performed to obtain better image quality, and then the restored image is used for positioning. However, these methods have many drawbacks. For the first type of methods, if the image quality deteriorates seriously, the accuracy of matching and positioning will be seriously reduced; for the second type of methods, many image restoration methods are designed only to improve human visual perception rather than machine perception. Therefore, the positioning accuracy cannot be improved. What's worse, when the degradation model is unknown, general restoration algorithms, such as deblurring, do not perform well on real images.

It can be seen that the prior art has a technical problem of low positioning accuracy due to low image quality.

SUMMARY

In view of the above-described defects or improvement requirements in the prior art, the present disclosure provides a joint image restoration and matching method based on distance weighted sparse representation prior, thereby solving the technical problem of low positioning accuracy due to low image quality in the prior art.

In order to achieve the above objective, the disclosure provides a joint image restoration and matching method based on distance weighted sparse representation prior, comprising:

(1) Cropping, at a step size of a, a dictionary from a reference image, acquiring an initial sparse representation coefficient vector of a degraded image in the dictionary by using a distance-weighted sparse representation algorithm, restoring the degraded image by using the initial sparse representation coefficient vector and the dictionary to obtain an initial clear image of the degraded image.

(2) Estimating a blur kernel by using constraints of the degraded image and the initial clear image on the blur kernel and regularization of a gradient operator to obtain a blur kernel estimation.

(3) Estimating an initial clear image by using constraints of the blur kernel estimation and the dictionary D on the initial clear image to obtain a clear image estimation.

(4) Acquiring a sparse representation coefficient vector estimation of the clear image estimation in the dictionary by using the distance-weighted sparse representation algorithm.

(5) Updating the degraded image in the step (2) with the clear image estimation obtained in the step (3), then performing A iterations of the steps (2) to (4) to obtain a target image and a target sparse representation coefficient vector, and determining an initial location of the target image in the reference image according to a maximum value in the target sparse representation coefficient vector.

(6) Cropping a new reference image from the reference image, a center of the new reference image being the initial location, and a length and width of the new reference image being equal to the length and width of the target image plus the step size of a, replacing the reference image in the step (1) with the new reference image, and repeating the steps (1) to (5) to obtain a restored image of the target image and a location of the target image in the reference image.

Further, the step (1) includes:

(1-1) Cropping, at a step size of a, a dictionary D from a reference image, $D = [i_1, i_2, ..., i_m]$, where $i_m$ represents a $m$-th image block cropped from the reference image at the step size of s;

(1-2) Acquiring an initial sparse representation coefficient vector $\alpha$ of a degraded image in the dictionary by using a distance-weighted sparse representation algorithm, $\alpha = \left\| y - D\alpha \right\|_2^2 + \lambda \left\| dist \circ \alpha \right\|_1$, $\alpha \geq 0$, where y represents a matrix describing the degraded image, $\lambda$ represents a weight of the sparse term, and $dist$ represents distance weighted sparse representation;

(1-3) Restoring the degraded image by using the initial sparse representation coefficient vector and the dictionary to obtain an initial clear image of the degraded image, $x = D\alpha$, where x represents a matrix describing an initial clear image.

Further, the blur kernel estimation is expressed as:

$$\hat{k} = \arg \min_{k} \left\| k * x - y \right\|_2^2 + \gamma \left\| k \right\|_2^2 + \nu \left\| \nabla k \right\|_2^2$$

Where x represents a matrix describing the initial clear image, $\hat{k}$ represents the blur kernel estimation, y represents a matrix describing the degraded image, $\gamma$ represents a weight of the regularization term of k, Vk represents a gradient of k, $\nu$ represents a weight of the regularization term $\left\| \nabla k \right\|_2^2$, and k represents the blur kernel.

Further, the clear image estimation is expressed as:

$$\hat{x} = \arg \min_{x} \left\| \hat{k} * x - y \right\|_2^2 + \eta \left\| x - D\hat{\alpha} \right\|_2^2 + \tau \sum_{l=1}^{L} \left| e_l * x \right|^s$$

Where $\hat{x}$ represents a matrix describing the clear image estimation, $\hat{k}$ represents the blur kernel estimation, y represents a matrix describing the degraded image, $\eta$ represents a weight of the term $\left\| x - D\hat{\alpha} \right\|_2^2$, D represents a dictionary, $\hat{\alpha}$ represents a sparse representation coefficient vector estimation, $\tau$ represents a weight of the sparse prior constraint term of the reference image, $e_l$ represents first-order filters, s represents a sparse exponent, and x represents a matrix describing the initial clear image.

Further, the step (3) further includes:

Establishing an energy equation by introducing new variables $u_l$ ($l \in 1,2,...,L$), where $L$ represents the total number of the variables, decomposing the energy equation into a x-subproblem and a u-subproblem, and getting optimal solutions for the x-subproblem and the u-subproblem to obtain a clear image estimation.

Further, the energy equation is expressed as:

$$\mathbf{E}(x, u) = \left\| \hat{k} * x - y \right\|_2^2 + \eta \left\| x - D\hat{\alpha} \right\|_2^2 + \tau \sum_{l=1}^{L} \left| u_l \right|^s + \beta \sum_{l=1}^{L} \left\| u_l - e_l * x \right\|_2^2$$

Where $\mathbf{E}(x, u)$ represents an energy equation, x represents a matrix describing the initial clear image, $\hat{k}$ represents the blur kernel estimation, y represents a matrix describing the degraded image, $\eta$ represents a weight of the term $\left\| x - D\hat{\alpha} \right\|_2^2$, D represents the dictionary, $\hat{\alpha}$ represents the sparse representation coefficient vector estimation, $\tau$ repre-

sents a weight of the term $\sum_{l=1}^{L}\left|\mathbf{u}_l\right|^s$, $s$ represents a sparse exponent, $\beta$ represents a weight of the regularization term

$$\sum_{l=1}^{L}\left\|\mathbf{u}_l - e_l * \mathbf{x}\right\|_2^2,$$

and $e_l$ represents first-order filters.

Further, the x-subproblem is:

$$\mathbf{E}\left(\mathbf{x}\right) = \left\|\hat{\mathbf{k}} * \mathbf{x} - \mathbf{y}\right\|_2^2 + \eta \left\|\mathbf{x} - \mathbf{D}\hat{\alpha}\right\|_2^2 + \beta \sum_{l=1}^{L}\left\|\mathbf{u}_l - e_l * \mathbf{x}\right\|_2^2$$

Where x represents a matrix describing the initial clear image, u represents an auxiliary variable, $\hat{\mathbf{k}}$ represents the blur kernel estimation, y represents a matrix describing the degraded image, $\eta$ represents a weight of the term

$$\left\|\mathbf{x} - \mathbf{D}\hat{\alpha}\right\|_2^2,$$

D represents a dictionary, $\hat{\alpha}$ represents a sparse representation coefficient vector estimation, $\beta$ represents

a weight of the regularization term $\sum_{l=1}^{L}\left\|\mathbf{u}_l - e_l * \mathbf{x}\right\|_2^2,$ and $e_l$ represents first-order filters.

Further, the u-subproblem is:

$$\hat{\mathbf{u}}_l = \arg\min \tau\left|\mathbf{u}_l\right|^s + \beta\left\|\mathbf{u}_l - e_l * \mathbf{x}\right\|_2^2$$

Where x represents a matrix describing the initial clear image, $\tau$ represents a weight of the term $\sum_{l=1}^{L}\left|\mathbf{u}_l\right|^s$, $s$ represents a sparse exponent, $\beta$ represents a weight of the regularization term $\sum_{l=1}^{L}\left\|\mathbf{u}_l - e_l * \mathbf{x}\right\|_2^2,$ and $e_l$ represents first-order filters.

Further, in the step (6) of replacing the reference image in the step (1) with the new reference image and repeating the steps (1) to (5), a dictionary is cropped from the new reference image at a step size of b (b<a).

In general, by comparing the above technical solution of the present inventive concept with the prior art, the present disclosure has the following beneficial effects:

1. In the present disclosure, A iterations are performed to obtain a target image and a target sparse representation coefficient vector, in which the target image is already a relatively clear image restored from the degraded image, and meanwhile an initial location of the target image in the reference image is obtained according to a maximum value in the target sparse representation coefficient vector. At this time, the search range of the target image is reduced to a smaller range relative to the reference image, and the above algorithm is used again to perform accurate matching of the target image in this range, thereby obtaining a final restored image and a positioning result. The method of the present disclosure effectively solves the problem that the noise-sensitive and poor restoration effect has a serious influence on the matching task in the existing blur image restoration and matching methods, and is suitable for the visual navigation system.

2. The present disclosure provides a method jointing image restoration and matching. During the iterative process, the image restoration and matching tasks can be mutually promoted, which can correct initial error location, and continuously increase the confidence of correct location. The distance weighted information is incorporated into the sparse representation model, so that weights of different types of data become smaller, which increases the discriminability of the image. In the present disclosure, through establishing an energy equation by introducing new variables, decomposing the energy equation into a x-subproblem and a u-subproblem, and getting optimal solutions for the x-subproblem and the u-subproblem to obtain a clear image estimation, the convergence speed of the algorithm is further improved, and the algorithm becomes more concise and clear. Therefore, the present disclosure is particularly suitable for the field of blur image matching and positioning.

BRIEF DESCRIPTION OF THE DRAWINGS

FIG. 1 is a flowchart of a joint image restoration and matching method according to an embodiment of the present disclosure;

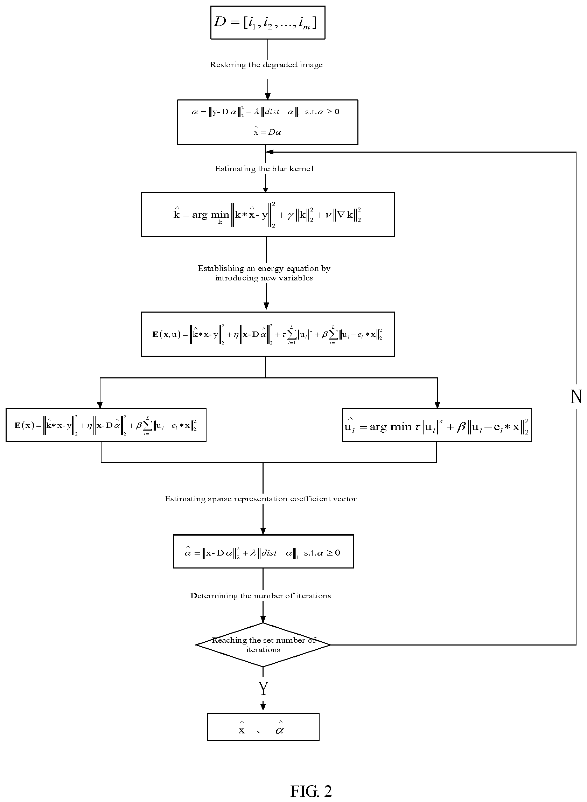

FIG. 2 is a schematic diagram of the joint image restoration and matching method based on distance weighted sparse representation prior according to the embodiment of the present disclosure;

FIG. 3 (a) is a reference image according to the embodiment of the present disclosure;

FIG. 3(b) is a blur real-time image to be positioned according to the embodiment of the present disclosure;

FIG. 3(c) is a diagram showing a positioning result of a direct matching algorithm according to the embodiment of the present disclosure;

FIG. 3(d) is a diagram showing a positioning result of a DSRC algorithm according to the embodiment of the present disclosure;

FIG. 3(e) is a diagram showing a positioning result of a SRC algorithm according to the embodiment of the present disclosure;

FIG. 3(f) is a diagram showing a positioning result of a JRL-SR algorithm according to the embodiment of the present disclosure;

FIG. 3(g) is a diagram showing an initial positioning result of the joint image restoration and matching method according to the embodiment of the present disclosure;

FIG. 3(h) is a diagram showing a positioning result of the joint image restoration and matching method according to the embodiment of the present disclosure.

DETAILED DESCRIPTION OF THE EMBODIMENTS

For clear understanding of the objectives, features and advantages of the present disclosure, detailed description of the present disclosure will be given below in conjunction with accompanying drawings and specific embodiments. It should be noted that the embodiments described herein are only meant to explain the present disclosure, and not to limit the scope of the present disclosure. Furthermore, the technical features related to the embodiments of the disclosure described below can be mutually combined if they are not found to be mutually exclusive.

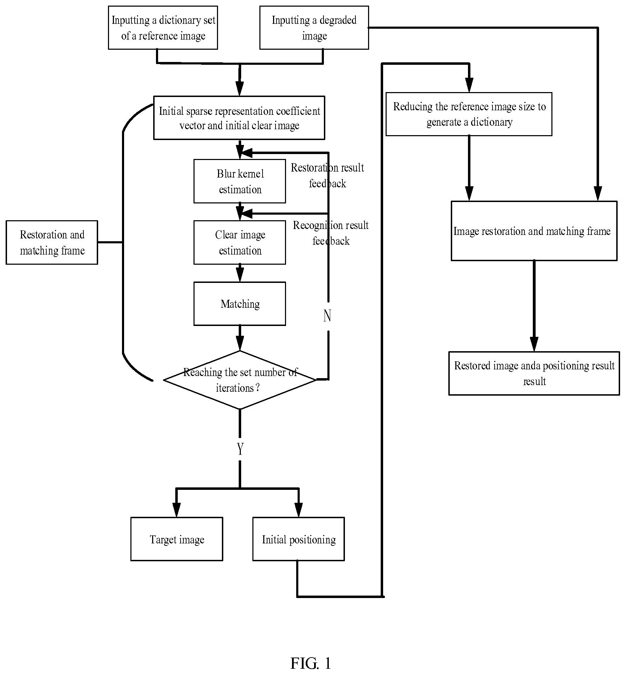

As shown in FIG. 1, there is provided a joint image restoration and matching method based on distance weighted sparse representation prior, comprising:

(1) Cropping, at a step size of a, a dictionary from a reference image, acquiring an initial sparse representation coefficient vector of a degraded image in the dictionary by using a distance-weighted sparse representation algorithm, restoring the degraded image by using the initial sparse representation coefficient vector and the dictionary to obtain an initial clear image of the degraded image.

(2) Estimating a blur kernel by using constraints of the degraded image and the initial clear image on the blur kernel and regularization of a gradient operator to obtain a blur kernel estimation.

(3) Estimating an initial clear image by using constraints of the blur kernel estimation and the dictionary D on the initial clear image to obtain a clear image estimation.

(4) Acquiring a sparse representation coefficient vector estimation of the clear image estimation in the dictionary by using the distance-weighted sparse representation algorithm.

(5) Updating the degraded image in the step (2) with the clear image estimation obtained in the step (3), then performing A iterations of the steps (2) to (4) to obtain a target image and a target sparse representation coefficient vector, and determining an initial location of the target image in the reference image according to a maximum value in the target sparse representation coefficient vector.

(6) Cropping a new reference image from the reference image, a center of the new reference image being the initial location, and a length and width of the new reference image being equal to the length and width of the target image plus the step size of a, replacing the reference image in the step (1) with the new reference image, cropping, at a step size of b (b<a), a dictionary from the new reference image, and repeating the steps (1) to (5), so as to obtain a restored image of the target image and a positioning result of the target image in the reference image.

After A iterations, the initial positioning accuracy of the target image in the reference image is measured. The positioning accuracy rate is statistically calculated. The initial positioning accuracy is measured by using the position deviation, that is, the pixel difference between the actual position and the initial location of the target image in the reference image. The positioning accuracy rate is statistically calculated, especially by a ratio of the number of successful locations to the number of all initial locations of all target images to be positioned, in which it is considered that a target image with an initial positioning accuracy of less than or equal to 5 is successfully positioned, and a target image with an initial positioning accuracy of greater than 5 is unsuccessfully positioned.

If after A iterations, the positioning accuracy rate is greater than or equal to 85%, it is considered that A is the optimal number of iterations for the current reference image scale, and then the iterations for the next fine reference image scale can be performed.

As shown in FIG. (2), the step (1) includes:

(1-1) Cropping, at a step size of a, a dictionary D from a reference image, $D = [i_1, i_2, ..., i_m]$, where $i_m$ represents a $m$th picture cropped from the reference image at the step size of s;

(1-2) Acquiring an initial sparse representation coefficient vector $\alpha$ of a degraded image in the dictionary by using a distance-weighted sparse representation algorithm, $\alpha = \left\| y \text{-} D\alpha \right\|_2^2 + \lambda \left\| dist \circ \alpha \right\|_1$, $\alpha \geq 0$, where y represents a matrix describing the degraded image, $\lambda$ represents a weight of the sparse term, and $dist$ represents distance-weighted sparse representation;

(1-3) Restoring the degraded image by using the initial sparse representation coefficient vector and the dictionary to obtain an initial clear image of the degraded image, $x = D\alpha$, where x represents a matrix describing the initial clear image.

In the embodiments of the present disclosure, the blur kernel estimation is preferably expressed as:

$$\hat{k} = \arg \min_k \left\| k * x \text{-} y \right\|_2^2 + \gamma \left\| k \right\|_2^2 + \nu \left\| \nabla k \right\|_2^2$$

Where x represents a matrix describing the initial clear image, $\hat{k}$ represents the blur kernel estimation, y represents a matrix describing the degraded image, $\gamma$ represents a weight of the regularization term of k, $\nabla k$ represents a gradient of k, $\nu$ represents a weight of the regularization term $\left\| \nabla k \right\|_2^2$, and k represents the blur kernel.

In the embodiment of the present disclosure, the clear image estimation is preferably expressed as:

$$\hat{x} = \arg \min_x \left\| \hat{k} * x \text{-} y \right\|_2^2 + \eta \left\| x \text{-} D\hat{\alpha} \right\|_2^2 + \tau \sum_{l=1}^{L} \left| e_l * x \right|^s$$

Where $\hat{x}$ represents a matrix describing the clear image estimation, $\hat{k}$ represents the blur kernel estimation, y represents a matrix describing the degraded image, $\eta$ represents a weight of the term $\left\| x \text{-} D\hat{\alpha} \right\|_2^2$, D represents a

dictionary, $\hat{\alpha}$ represents a sparse representation coefficient vector estimation, $\tau$ represents a weight of the sparse prior constraint term of the reference image, $e_l$ represents first-order filters, $s$ represents a sparse exponent, and x represents a matrix describing the initial clear image.

In the embodiments of the present disclosure, the step (3) further includes:

Establishing an energy equation by introducing new variables $u_l (l \in 1,2,...,L)$, where $L$ represents the total number of the variables, decomposing the energy equation into a x-subproblem and a u-subproblem, and getting optimal solutions for the x-subproblem and the u-subproblem to obtain a clear image estimation. The energy equation is expressed as:

$$\mathbf{E}\left(\mathrm{x,u}\right) = \left\|\hat{\mathrm{k}} * \mathrm{x} - \mathrm{y}\right\|_2^2 + \eta \left\|\mathrm{x} - \mathrm{D}\hat{\alpha}\right\|_2^2 + \tau \sum_{l=1}^{L} \left|\mathrm{u}_l\right|^s + \beta \sum_{l=1}^{L} \left\|\mathrm{u}_l - e_l * \mathrm{x}\right\|_2^2$$

Where $\mathbf{E}(x,u)$ represents an energy equation, x represents a matrix describing the initial clear image, $\hat{\mathrm{k}}$ represents the blur kernel estimation, y represents a matrix describing the degraded image, $\eta$ represents a weight of the term

$\left\|\mathrm{x} - \mathrm{D}\hat{\alpha}\right\|_2^2$, D represents a dictionary, $\hat{\alpha}$ represents a sparse representation coefficient vector estimation, $\tau$ represents

a weight of the term $\sum_{l=1}^{L} \left|\mathrm{u}_l\right|^s$, $s$ represents a sparse exponent, $\beta$ represents a weight of the regularization term

$\sum_{l=1}^{L} \left\|\mathrm{u}_l - e_l * \mathrm{x}\right\|_2^2$, and $e_l$ represents first-order filters.

The x-subproblem is:

$$\mathbf{E}\left(\mathrm{x}\right) = \left\|\hat{\mathrm{k}} * \mathrm{x} - \mathrm{y}\right\|_2^2 + \eta \left\|\mathrm{x} - \mathrm{D}\hat{\alpha}\right\|_2^2 + \beta \sum_{l=1}^{L} \left\|\mathrm{u}_l - e_l * \mathrm{x}\right\|_2^2$$

Where x represents a matrix describing the initial clear image, u represents an auxiliary variable, $\hat{\mathrm{k}}$ represents the blur kernel estimation, y represents a matrix describing the degraded image, $\eta$ represents a weight of the term

$\left\|\mathrm{x} - \mathrm{D}\hat{\alpha}\right\|_2^2$, D represents a dictionary, $\hat{\alpha}$ represents a sparse representation coefficient vector estimation, $\beta$ represents

a weight of the regularization term $\sum_{l=1}^{L} \left\|\mathrm{u}_l - e_l * \mathrm{x}\right\|_2^2$, and $e_l$ represents first-order filters.

The u-subproblem is:

$$\hat{\mathrm{u}}_l = \arg\min \tau \left|\mathrm{u}_l\right|^s + \beta \left\|\mathrm{u}_l - \mathrm{e}_l * \mathrm{x}\right\|_2^2$$

Where x represents a matrix describing the initial clear image, $\tau$ represents a weight of the term $\sum_{l=1}^{L} \left|\mathrm{u}_l\right|^s$, $s$

represents a sparse exponent, $\beta$ represents a weight of the regularization term $\sum_{l=1}^{L} \left\|\mathrm{u}_l - e_l * \mathrm{x}\right\|_2^2$, and $e_l$ represents first-order filters.

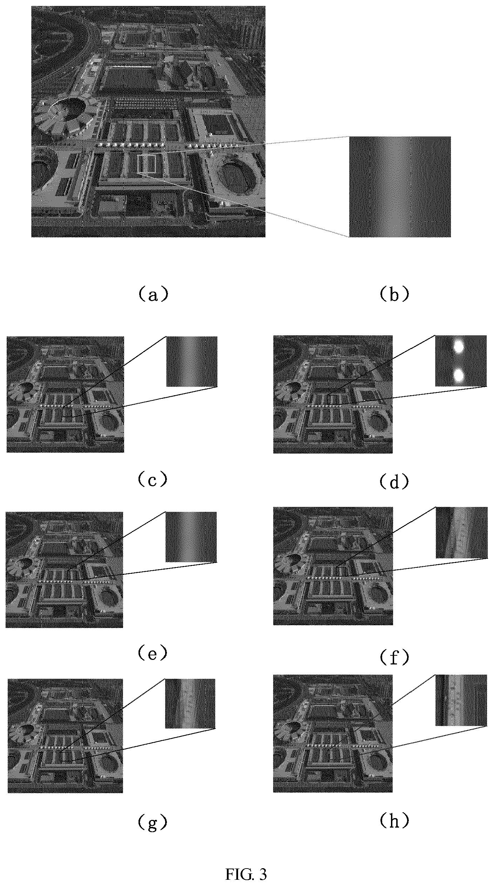

In the embodiments of the present disclosure, a is 5, and b is 2. FIGS. 3(a) to 3(h) show location effect comparisons of the algorithm of the present disclosure with other algorithms on a partial test image, in which FIG. 3 (a) shows a reference image, FIG. 3(b) shows a blur real-time image to be positioned, FIG. 3(c) shows a positioning result of the direct matching algorithm, FIG. 3(d) shows a positioning result of the DSRC algorithm, FIG. 3(e) shows a positioning result of the SRC algorithm, FIG. 3(f) shows a positioning result of the JRL-SR algorithm, FIG. 3(g) shows a positioning result (initial location) of the JRL-DSR1 algorithm according to the present disclosure, and FIG. 3(h) shows a positioning result (precise location after the initial location) of the JRL-DSR2 algorithm according to the present disclosure. It can be seen from FIGS. 3(a) to 3(h) that in a case where the target image is severely blurred, through combining restoration and matching tasks, the algorithm according to the present disclosure can correct initial error location, and continuously increase the confidence of correct location. The experimental results also showed that this integration method is better than the methods that perform separate processing of deblurring and location.

It should be readily understood to those skilled in the art that the above description is only preferred embodiments of the present disclosure, and does not limit the scope of the present disclosure. Any change, equivalent substitution and modification made without departing from the spirit and scope of the present disclosure should be included within the scope of the protection of the present disclosure.

**Claims**

1. A joint image restoration and matching method based on distance weighted sparse representation prior, comprising:

    (1) cropping, at a step size of a, a dictionary from a reference image, acquiring an initial sparse representation coefficient vector of a degraded image in the dictionary by using a distance-weighted sparse representation algorithm, restoring the degraded image by using the initial sparse representation coefficient vector and the dictionary to obtain an initial clear image of the degraded image;
    (2) estimating a blur kernel by using constraints of the degraded image and the initial clear image on the blur kernel and regularization of a gradient operator to obtain a blur kernel estimation;
    (3) estimating an initial clear image by using constraints of the blur kernel estimation and the dictionary D on the initial clear image to obtain a clear image estimation;
    (4) acquiring a sparse representation coefficient vector estimation of the clear image estimation in the dictionary by using the distance-weighted sparse representation algorithm;
    (5) updating the degraded image in the step (2) with the clear image estimation obtained in the step (3), then performing A iterations of the steps (2) to (4) to obtain a target image and a target sparse representation coefficient vector, and determining an initial location of the target image in the reference image according to a maximum value in the target sparse representation coefficient vector;
    (6) cropping a new reference image from the reference image, a center of the new reference image being the initial location, and a length and width of the new reference image being equal to the length and width of the target image plus the step size of a, replacing the reference image in the step (1) with the new reference image, and repeating the steps (1) to (5) to obtain a restored image of the target image and a location of the target image in the reference image.

2. The joint image restoration and matching method based on distance weighted sparse representation prior according to claim 1, **characterized in that** the step (1) includes:

    (1-1) cropping, at a step size of a, a dictionary D from a reference image, $D = [i_1, i_2, ..., i_m]$, where $i_m$ represents a $m$-th image block cropped from the reference image at the step size of s;
    (1-2) acquiring an initial sparse representation coefficient vector $\alpha$ of a degraded image in the dictionary by using a distance-weighted sparse representation algorithm, $\alpha = \left\| y - D\alpha \right\|_2^2 + \lambda \left\| dist \circ \alpha \right\|_1$, $\alpha \geq 0$, where y represents a matrix describing the degraded image, $\lambda$ represents a weight of the sparse term, and *dist* represents distance weighted sparse representation;
    (1-3) restoring the degraded image by using the initial sparse representation coefficient vector and the dictionary to obtain an initial clear image of the degraded image, $x = D\alpha$, where x represents a matrix describing an initial clear image.

3. The joint image restoration and matching method based on distance weighted sparse representation prior according to claim 1 or 2, **characterized in that** the blur kernel estimation is expressed as:

$$\hat{k} = \arg \min_k \left\| k * x - y \right\|_2^2 + \gamma \left\| k \right\|_2^2 + \nu \left\| \nabla k \right\|_2^2$$

where x represents a matrix describing the initial clear image, $\hat{k}$ represents the blur kernel estimation, y represents a matrix describing the degraded image, $\gamma$ represents a weight of the regularization term of k, $\nabla$k represents a gradient of k, $\nu$ represents a weight of the regularization term $\left\| \nabla k \right\|_2^2$, and k represents the blur kernel.

4. The joint image restoration and matching method based on distance weighted sparse representation prior according to claim 1 or 2, **characterized in that** the clear image estimation is expressed as:

$$\hat{x} = \arg \min_{x} \left\| \hat{k} * x - y \right\|_2^2 + \eta \left\| x - D\hat{\alpha} \right\|_2^2 + \tau \sum_{l=1}^{L} \left| e_l * x \right|^s$$

where $\hat{x}$ represents a matrix describing the clear image estimation, $\hat{k}$ represents the blur kernel estimation, y represents a matrix describing the degraded image, $\eta$ represents a weight of the term $\left\| x - D\hat{\alpha} \right\|_2^2$, D represents a dictionary, $\hat{\alpha}$ represents a sparse representation coefficient vector estimation, $\tau$ represents a weight of the sparse prior constraint term of the reference image, $e_l$ represents first-order filters, s represents a sparse exponent, and x represents a matrix describing the initial clear image.

5. The joint image restoration and matching method based on distance weighted sparse representation prior according to claim 1 or 2, **characterized in that** the step (3) further includes:
establishing an energy equation by introducing new variables $u_l$ ($l \in$ 1,2,...,L), where L represents the total number of the variables, decomposing the energy equation into a x-subproblem and a u-subproblem, and getting optimal solutions for the x-subproblem and the u-subproblem to obtain a clear image estimation.

6. The joint image restoration and matching method based on distance weighted sparse representation prior according to claim 5, **characterized in that** the energy equation is expressed as:

$$\mathbf{E}(x, u) = \left\| \hat{k} * x - y \right\|_2^2 + \eta \left\| x - D\hat{\alpha} \right\|_2^2 + \tau \sum_{l=1}^{L} \left| u_l \right|^s + \beta \sum_{l=1}^{L} \left\| u_l - e_l * x \right\|_2^2$$

where $\mathbf{E}(x,u)$ represents an energy equation, x represents a matrix describing the initial clear image, $\hat{k}$ represents the blur kernel estimation, y represents a matrix describing the degraded image, $\eta$ represents a weight of the term $\left\| x - D\hat{\alpha} \right\|_2^2$, D represents the dictionary, $\hat{\alpha}$ represents the sparse representation coefficient vector estimation, $\tau$ represents a weight of the term $\sum_{l=1}^{L} \left| u_l \right|^s$, s represents a sparse exponent, $\beta$ represents a weight of the regularization term $\sum_{l=1}^{L} \left\| u_l - e_l * x \right\|_2^2$, and $e_l$ represents first-order filters.

7. The joint image restoration and matching method based on distance weighted sparse representation prior according to claim 5, **characterized in that** the x-subproblem is:

$$\mathbf{E}(x) = \left\| \hat{k} * x - y \right\|_2^2 + \eta \left\| x - D\hat{\alpha} \right\|_2^2 + \beta \sum_{l=1}^{L} \left\| u_l - e_l * x \right\|_2^2$$

where x represents a matrix describing the initial clear image, u represents an auxiliary variable, $\hat{k}$ represents the blur kernel estimation, y represents a matrix describing the degraded image, $\eta$ represents a weight of the term

$$\left\| x - D \hat{\alpha} \right\|_2^2 ,$$

D represents a dictionary, $\hat{\alpha}$ represents a sparse representation coefficient vector estimation, $\beta$ represents a weight of the regularization term $\sum_{l=1}^{L} \left\| u_l - e_l * x \right\|_2^2 ,$ and $e_l$ represents a first-order filter.

8.  The joint image restoration and matching method based on distance weighted sparse representation prior according to claim 5, **characterized in that** the u-subproblem is:

$$\hat{u}_l = \arg \min \tau \left| u_l \right|^s + \beta \left\| u_l - e_l * x \right\|_2^2$$

where x represents a matrix describing the initial clear image, $\tau$ represents a weight of the term $\sum_{l=1}^{L} \left| u_l \right|^s ,$ s represents a sparse exponent, $\beta$ represents a weight of the regularization term $\sum_{l=1}^{L} \left\| u_l - e_l * x \right\|_2^2 ,$ and $e_l$ represents first-order filters.

9.  The joint image restoration and matching method based on distance weighted sparse representation prior according to claim 1 or 2, **characterized in that** in the step (6) of replacing the reference image in the step (1) with the new reference image and repeating the steps (1) to (5), a dictionary is cropped from the new reference image at a step size of b (b<a).

Inputting a dictionary set of a reference image

Inputting a degraded image

Initial sparse representation coefficient vector and initial clear image

Reducing the reference image size to generate a dictionary

Blur kernel estimation

Restoration result feedback

Restoration and matching frame

Clear image estimation

Recognition result feedback

Image restoration and matching frame

Matching

N

Reaching the set number of iterations?

Restored image and a positioning result result

Y

Target image

Initial positioning

FIG. 1

$$D = [i_1, i_2, ..., i_m]$$

Restoring the degraded image

$$\alpha = \|y - D\alpha\|_2^2 + \lambda \|dist \quad \alpha\|_1 \quad \text{s.t.} \alpha \geq 0$$
$$\hat{x} = D\alpha$$

Estimating the blur kernel

$$\hat{k} = \arg \min_k \|k * \hat{x} - y\|_2^2 + \gamma \|k\|_2^2 + \nu \|\nabla k\|_2^2$$

Establishing an energy equation by
introducing new variables

$$E(x, u) = \|\hat{k} * x - y\|_2^2 + \eta \|x - D\hat{\alpha}\|_2^2 + \tau \sum_{l=1}^{L} |u_l|^s + \beta \sum_{l=1}^{L} \|u_l - e_l * x\|_2^2$$

$$E(x) = \|\hat{k} * x - y\|_2^2 + \eta \|x - D\hat{\alpha}\|_2^2 + \beta \sum_{l=1}^{L} \|u_l - e_l * x\|_2^2$$

$$\hat{u}_l = \arg \min \tau |u_l|^s + \beta \|u_l - e_l * x\|_2^2$$

N

Estimating sparse representation coefficient vector

$$\hat{\alpha} = \|x - D\alpha\|_2^2 + \lambda \|dist \quad \alpha\|_1 \quad \text{s.t.} \alpha \geq 0$$

Determining the number of iterations

Reaching the set number of
iterations

Y

$$\hat{x} \quad \text{、} \quad \hat{\alpha}$$

FIG. 2

（a）

（b）

（c）

（d）

（e）

（f）

（g）

（h）

FIG. 3

## INTERNATIONAL SEARCH REPORT

| International application No. |
| --- |
| **PCT/CN2018/080754** |

| A. | CLASSIFICATION OF SUBJECT MATTER |
| --- | --- |
| | G06T 5/00(2006.01)i |

According to International Patent Classification (IPC) or to both national classification and IPC

| B. | FIELDS SEARCHED |
| --- | --- |

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

CNABS; VEN, CNKI: 距离, 加权, 稀疏, 模糊核, 图像, 复原, distance, weighted, sparse, image, kernel, restore

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 105957024 A (XIDIAN UNIVERSITY) 21 September 2016 (2016-09-21) entire document | 1-9 |
| A | US 2013242059 A1 (3DMEDIA CORP.) 19 September 2013 (2013-09-19) entire document | 1-9 |
| A | US 7359576 B1 (ADOBE SYSTEMS INC.) 15 April 2008 (2008-04-15) entire document | 1-9 |
| A | CN 104091350 A (SOUTH CHINA UNIVERSITY OF TECHNOLOGY) 08 October 2014 (2014-10-08) entire document | 1-9 |
| A | CN 103761710 A (XIDIAN UNIVERSITY) 30 April 2014 (2014-04-30) entire document | 1-9 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **03 December 2018** | **11 December 2018** |

| Name and mailing address of the ISA/CN | Authorized officer |
| --- | --- |
| **State Intellectual Property Office of the P. R. China No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

### INTERNATIONAL SEARCH REPORT
**Information on patent family members**

International application No.

**PCT/CN2018/080754**

| Patent document cited in search report | | | Publication date (day/month/year) | Patent family member(s) | | | Publication date (day/month/year) |
|---|---|---|---|---|---|---|---|
| CN | 105957024 | A | 21 September 2016 | | None | | |
| US | 2013242059 | A1 | 19 September 2013 | JP | 2014502818 | A | 03 February 2014 |
| | | | | US | 2012314036 | A1 | 13 December 2012 |
| | | | | US | 2012162379 | A1 | 28 June 2012 |
| | | | | US | 8274552 | B2 | 25 September 2012 |
| | | | | US | 8441520 | B2 | 14 May 2013 |
| | | | | KR | 20140051112 | A | 30 April 2014 |
| | | | | WO | 2012091878 | A2 | 05 July 2012 |
| | | | | WO | 2012091878 | A3 | 07 September 2012 |
| | | | | CN | 103329548 | A | 25 September 2013 |
| US | 7359576 | B1 | 15 April 2008 | US | 7792386 | B1 | 07 September 2010 |
| CN | 104091350 | A | 08 October 2014 | CN | 104091350 | B | 25 August 2017 |
| CN | 103761710 | A | 30 April 2014 | CN | 103761710 | B | 06 July 2016 |

Form PCT/ISA/210 (patent family annex) (January 2015)